## Europäisches Patentamt
## European Patent Office
## Office européen des brevets

(19)

(11) Numéro de publication: **0 198 754**
**B1**

(12)

# FASCICULE DE BREVET EUROPEEN

(45) Date de publication du fascicule du brevet:
06.12.89

(51) Int. Cl.⁴: **G02F 1/133, H01L 21/84**

(21) Numéro de dépôt: 86400666.3

(22) Date de dépôt: 27.03.86

(54) Procédé de réalisation de matrices de commande à diodes pour écran plat de visualisation électrooptique, et écran plat réalisé par ce procédé.

(30) Priorité: 02.04.85 FR 8505008

(43) Date de publication de la demande:
22.10.86 Bulletin 86/43

(45) Mention de la délivrance du brevet:
06.12.89 Bulletin 89/49

(84) Etats contractants désignés:
DE GB IT NL

(56) Documents cités:
EP-A- 0 073 705
FR-A- 2 548 450
FR-A- 2 551 902
GB-A- 2 091 468

IBM TECHNICAL DISCLOSURE BULLETIN,
vol. 22, no. 1, juin 179, pages 296-298, New York, US;
M.H. BRODSKY et al.: "Large-area dot-matrix
liquid-crystal display having diodes deposited on a
substrate"

(73) Titulaire: THOMSON-CSF, 51, Esplanade du Général de
Gaulle, F-92800 Puteaux(FR)

(72) Inventeur: Szydlo, Nicolas, THOMSON-CSF
SCPI 19, avenue de Messine, F-75008 Paris(FR)
Inventeur: Perbet, Jean-Noel, THOMSON-CSF
SCPI 19, avenue de Messine, F-75008 Paris(FR)
Inventeur: Proust, Nicole, THOMSON-CSF
SCPI 19, avenue de Messine, F-75008 Paris(FR)

(74) Mandataire: Lepercque, Jean et al, THOMSON-CSF
SCPI, F-92045 PARIS LA DEFENSE CEDEX 67(FR)

## Description

L'invention concerne un procédé de réalisation de matrices de commande à diodes pour écran plat de visualisation électrooptique notamment pour écran de visualisation à cristal liquide ainsi qu'un écran plat réalisé par ce procédé.

Le domaine général de l'invention est l'électronique en couche mince sur grande surface. L'application visée par la présente invention est la commande intégrée de chaque point élémentaire d'un écran à cristal liquide.

Comme il est connu, ces écrans comportent généralement un grand nombre de points élémentaires ou éléments d'image de forme carrée ou rectangulaire. Ces éléments d'image peuvent être adressés individuellement. La définition de l'écran est fonction du nombre de points susceptibles de recevoir une information. La commande de chaque point se fait par application d'un champ électrique. Pour la visualisation d'information vidéo, il a été proposé des affichages de type matriciel. Chaque élément d'image est alors défini par l'intersection de deux réseaux de conducteurs orthogonaux appelés lignes et colonnes.

L'adressage d'un élément d'image au moyen de tensions de commande appliquées à la ligne et à la colonne qui le concernent n'a pas besoin d'être maintenu si l'on adopte une technique de multiplexage temporel permettant par récurrence de rafraîchir l'état de l'écran. Cette technique se fonde sur un effet de persistance qui peut être physiologique ou disponible au sein de l'élément de l'écran. Dans le cas de dispositifs d'affichage à cristaux liquides, on peut assimiler un élément d'image à un condensateur dont la constante de temps est suffisante pour maintenir la charge entre deux adressages transitoires successifs.

Les performances d'un écran matriciel peuvent être améliorées en montant en série avec l'élément image une résistance non linéaire qui est pratiquement isolante au-delà d'un seuil de tension et qui devient de plus en plus conducteur au-delà de ce seuil.

Un tel élément non linéaire peut être en matériau varistance comme cela est décrit dans la demande de brevet français N° 81 16217 déposée le 25 août 1981 au nom de la Demanderesse et publiée le 4 mars 1983 sous le N° 2 512 240.

Actuellement, les exigences de la technique en matière d'écrans de visualisation portent, en particulier, sur une meilleure définition de l'image. Dans le cas des écrans du type à affichage matriciel, on est alors amené à concevoir des dispositifs comportant un nombre élevé de lignes ou de colonnes d'adressage. Leur nombre peut aller jusqu'à 512 ou même 1024. Ceci augmente d'autant les éléments de commutation, donc le nombre de varistances dans la demande citée. Pour les fabrications en série, il est nécessaire notamment d'obtenir une bonne reproductivité et une grande stabilité de ces composants. Il est en outre nécessaire d'adapter, et ce également avec une bonne reproductibilité, la capacité électrique du composant à celle de la cellule associée. Or, les matériaux couramment utilisés, tels que des agglomérats de poudre d'oxyde de zinc, contenant des particules d'oxyde de bismuth et d'oxyde de manganèse ou autre matériau analogue, ne permettent pas de satisfaire entièrement ces exigences. La reproductibilité et la stabilité des varistances dépendent entre autre de la taille de grain et des techniques de passivation des joints de grains mis en oeuvre lors de la fabrication. La capacité parasite de la varistance liée également aux joints des grains est difficilement contrôlable.

D'autres éléments de commutation peuvent être utilisés. Néanmoins, les écrans de visualisation à cristal liquide présentent généralement des défauts d'homogénéité du contraste suivant les éléments d'image, dus à une dispersion des caractéristiques des éléments de commutation qui peut être importante et qui est difficile à éliminer sur de grandes surfaces. Ces défauts peuvent également trouver leur origine, dans une moindre mesure, dans l'épaisseur de la couche de cristal liquide et dans sa couche d'accrochage.

Afin de pallier ces inconvénients, on connaît des dispositifs dans lesquels les éléments non linéaires sont des transistors à films minces principalement à base de silicium amorphe ou de silicium polycristallin. Cependant ce type de technologie présente quelques difficultés qu'il faut résoudre pour obtenir un adressage de haute qualité :

1) meilleur contrôle des caractéristiques qui dépendent des propriétés de deux couches (silicium et isolant) et de leur interface;

2) une technologie d'auto-alignement est nécessaire pour une meilleur reproductibilité sur grande surface.

D'autres solutions prévoient que les éléments non linéaires dipolaires sont connues telle que la structure à base de deux diodes Schottky réalisée en série et en opposition. Ces diodes sont des diodes semiconductrices possédant tous le même point de fonctionnement dans la caractéristique courant-tension. La demande de brevet français FR-A 2 551 902 (N° 83 14542) déposée le 13 septembre 1983 par la Demanderesse décrit de tels dispositifs réalisés notamment sous forme de diodes Schottky.

Cependant, la mise en oeuvre de cette solution présente quelques contraintes :

- la fabrication comporte quatre niveaux de masquage ;

- un isolement des flancs de la mésa a-Si est nécessaire entraînant un dépôt d'isolant à basse température (diélectrique, polyimide) qui, d'une part doit être de bonne qualité et d'autre part doit recouvrir entièrement le flanc ;

- Les prises de contact métallique oxyde d'indium et d'étain (ou ITO) sur les métaux de grille Schottky sont nécessaires pour la connexion entre ces grilles, les colonnes et les électrodes points ;

- Bien que peu élevés les multiniveaux existent (principalement hauteur de la mésa) et il y a risque de coupure des colonnes et des connexions aux électrodes;

- Les électrodes en oxyde d'Indium et d'étain (ITO) élaborées au dernier stade du procédé ne peuvent être recuites (pour les rendre conductrices) qu'à des températures compatibles avec la non-exodiffusion de l'hydrogène contenu dans le silicium amorphe. La limite de 250-280°C est en général insuffisante pour un bon recuit de l'ITO.

La présente invention élimine ces différentes contraintes. En effet :

- le procédé de fabrication de l'invention ne nécessite que deux niveaux de masquage et le positionnement des masques ne demande pas une grande précision;
- l'isolement des flancs par un diélectrique n'est pas nécessaire pour les connexions;
- il n'est pas nécessaire de prise de contact par réservation;
- les électrodes et colonnes conductrices sont parfaitement coplanaires;
- il n'y a pas de limite pour le recuit de l'ITO (ou autres semi-transparents genre In₂O₃) si ce n'est la compatibilité avec le substrat utilisé.

Le procédé s'applique à des éléments non linéaires types diodes Schottky ou diodes PIN tête-bêche élaborées sur du silicium amorphe.

L'invention concerne donc un procédé de réalisation de matrices de commande à diodes pour écran plat de visualisation électrooptique comportant un substrat muni d'une face plane, caractérisé en ce qu'il comporte les phases successives suivantes:

- phase de dépôt sur la surface de la face plane du substrat d'une première couche d'un matériau conducteur;
- phase d'attaque de la couche de matériau conducteur pour former les électrodes de commande de l'écran de visualisation et les conducteurs de commande;
- phase de dépôt d'une couche semiconductrice amorphe non dopée;
- phase de dépôt d'une couche semiconductrice amorphe dopée ;
- phase de dépôt d'une deuxième couche d'un matériau conducteur ;
- phase d'attaque des différentes couches ainsi déposées jusqu'à la première couche de matériau conducteur de façon à créer des plots reliant les conducteurs de commande aux électrodes de commande.

L'invention concerne également un écran plat comportant une première lame et une deuxième lame parallèles entre lesquelles est placé un matériau électrooptique, les faces des deux lames en contact avec le matériau électrooptique étant munies d'électrodes et de conducteurs de commande, la première lame au moins étant transparente, caractérisé en ce que les électrodes de la deuxième lame sont couplées aux conducteurs de commande de la même lame par des éléments de commande non linéaires réalisés selon l'invention.

Les différents objets et caractéristiques de l'invention seront détaillés et dans la description qui va suivre faite en se reportant aux figures annexées qui représentent:

- les figures 1 à 6, un exemple de réalisation du procédé de l'invention selon lequel les éléments non linéaires sont des diodes Schottky;
- les figures 7 à 12, une variante du procédé de l'invention selon lequel les éléments non linéaires sont des diodes PIN ;
- les figures 13 et 14, la passivation des flancs des éléments linéaires de l'invention.

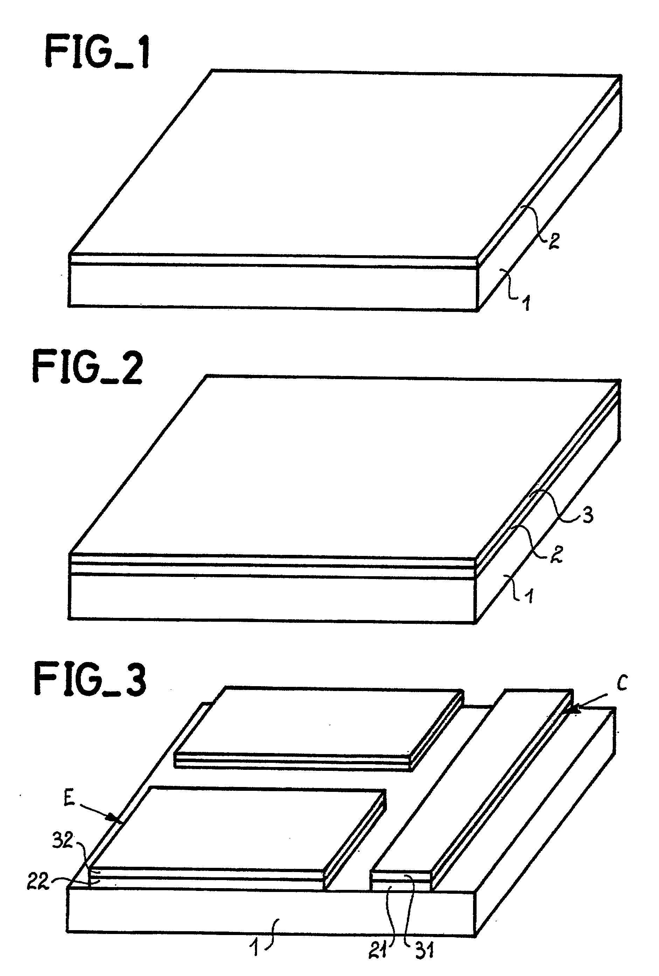

En se reportant aux figures 1 à 6, on va tout d'abord décrire un exemple de réalisation du procédé de l'invention permettant de réaliser des diodes Schottky sur un substrat en vue de commander un dispositif d'affichage à cristal liquide.

On dispose d'une plaque de substrat 1 en matériau isolant électriquement qui peut être une plaque transparente telle que du verre dans le cas d'une utilisation dans un dispositif d'affichage à cristal liquide par transparence.

Au cours d'une première phase, on dépose une couche uniforme d'un matériau conducteur et transparent. Ce matériau peut être un oxyde mixte d'étain et d'indium (ITO) ou un matériau équivalent (In₂O₃, SnO₂). Une telle couche aura une épaisseur comprise entre 50 et 100 nm. On peut aussi partir de substrats recouverts d'une telle couche et disponibles dans le commerce. On a donc, comme représenté en figure 1, une plaque de substrat 1 recouvert d'une couche 2 d'un matériau conducteur transparent.

Au cours d'une deuxième phase, on dépose une couche 3 d'un matériau métallique tel que du platine, du molybdène ou du palladium. Ce dépôt se fait par canon à électrons ou par pulvérisation cathodique et conduit à obtenir une couche de quelques dixaines de nanomètre d'épaisseur. Cette couche métallique servira à constituer les grilles des diodes Schottky. On obtient ainsi comme représenté en figure 2, un substrat 1 recouvert d'une couche 2 d'un matériau conducteur transparent et d'une couche métallique 3.

Au cours d'une troisième phase telle que représentée en figure 3, on découpe dans les deux couches 2 et 3 déposées précédemment, des électrodes telle que E et des conducteurs de colonne tel que C. Cette découpe se fait par un procédé connu de photolithographie ou par un procédé d'attaque au plasma. Chacune de ces méthodes nécessite un masquage délimitant les contours des zones à ne pas attaquer. Par ce masquage, les électrodes E ont une forme adaptée au type d'affichage à réaliser. C'est ainsi que couramment cette forme sera carrée ou rectangulaire. Les conducteurs de colonne C sont des rubans parallèles intercalés entre des colonnes d'électrodes E. On obtient ainsi, comme représenté en figure 3, sur un substrat 1, des électrodes E comportant une couche 22 de matériau conducteur transparent et une couche métallique 32 ainsi que des conducteurs C comportant une couche 21 de matériau conducteur transparent et une couche métallique 31.

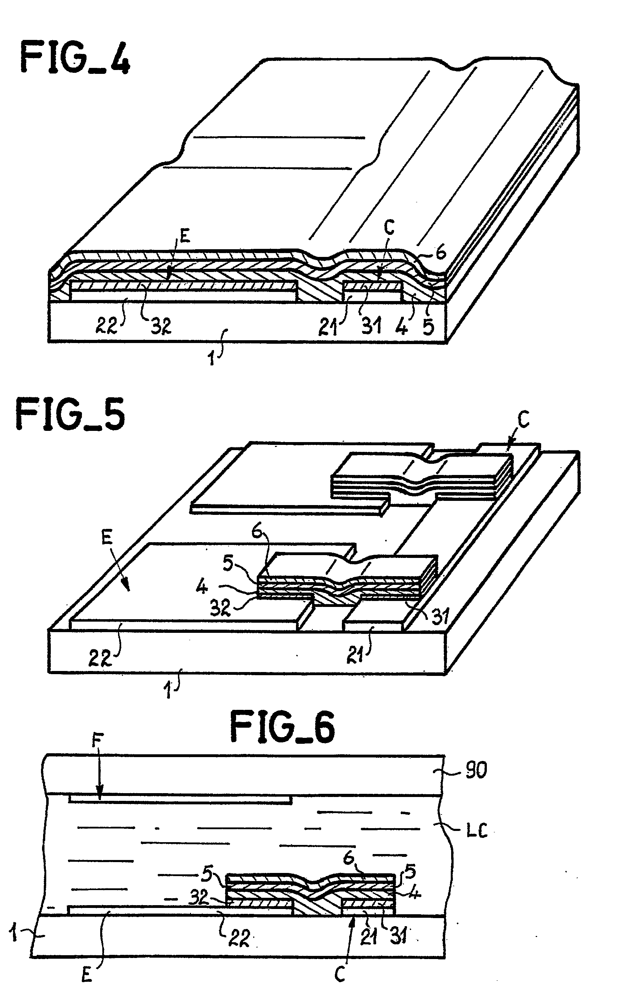

Au cours d'une quatrième phase, on dépose une couche de silicium amorphe non dopée référencée 4 sur la figure 4. Cette opération de dépôt peut utiliser un procédé de dépôt assisté par plasma à 250 degrés Celsius (Glow discharge in terminologie anglo-saxonne) ou un procédé d'épitaxie en phase vapeur (CVD ou Chemical Vapor Deposition en teminologie anglo-saxonne). Au cours du dépôt du silicium amorphe non dopé, on peut augmenter progressivement la température de façon à obtenir un profil décroissant de l'hydrogène incorporé. On peut également utiliser un procédé d'épitaxie en phase vapeur sous pression réduite à environ 550 degrés Celsius (LPCVD ou Low Pressure Chemical Vapor Deposition). L'épaisseur de la couche obtenue doit être de 200 à 600 nm.

Au cours d'une cinquième phase, on dépose une couche 5 de silicium amorphe dopée au phosphore (couche de type $n^+$). Ce dépôt se fait par le même procédé que celui utilisé dans la phase précédente. L'épaisseur de la couche doit être de 100 à 200 nm. Dans le cas où le procédé utilisé est une épitaxie en phase vapeur à pression réduite, il est nécessaire de prévoir une posthydrogénation de la couche de silicium avant le dépôt de la couche de métal qui va suivre.

En effet, au cours d'une sixième phase, on procède au dépôt d'une couche de métal 6 tel que du chrome ou de l'aluminium. Le dépôt se fait par effet Joule. Le silicium amorphe étant photo-conducteur, la couche obtenue doit avoir environ 50 nm d'épaisseur de façon à servir d'écran à la lumière pour les couches de silicium amorphe.

A l'issue de la sixième phase, on obtient un composant tel que représenté en figure 4 avec les électrodes E et le conducteur de colonne C déposés sur le substrat 1, l'ensemble étant entièrement recouvert par les trois couches 4, 5 et 6 déposées successivement au cours des phases précédemment décrites.

Au cours d'une septième phase on procède à la découpe dans les couches de matériau 31, 32, 4, 5 et 6 de structures mésas telles que représentées en figure 5 et reliant les électrodes E au conducteur C. Cette découpe se fait, après masquage des surfaces correspondant aux structures mésas, soit par attaque chimique, soit par attaque plasma ou tout autre procédé connu dans la technique de façon à ne pas attaquer la coche 2 de matériau conducteur transparent.

Comme cela est représenté en figure 5, chaque électrode E constituée d'une zone 22 en matériau conducteur transparent est couplée au conducteur C également en matériau conducteur transparent par deux diodes Schottky en opposition. Les deux diodes ont une grille métallique commune constituée par la couche métallique 6. Elles sont ensuite constituées d'une couche 5 de silicium dopé $n^+$ puis d'une couche 4 de silicium non dopé et enfin d'une couche métallique 31, 32.

Lors d'une huitième phase l'ensemble est recuit à une température comprise entre 250 et 280 degrés Celsius sous vide ou en atmosphère de gaz neutre. Ce recuit a pour objet d'améliorer les caractéristiques courant-tension des diodes Schottky par formation d'une interface stable en silicium de platine.

Il est à noter que lors de la septième phase précédente, la couche métallique 3 déposée lors de la deuxième phase, peut ne pas être attaquée. Dans ce cas, le dispositif pourra être utilisé en réflexion au lieu d'être utilisé en transparence. On peut même alors, se dispenser du dépôt de matériau conducteur transparent ce qui supprime la première phase décrite précédemment.

Comme cela est représenté en figure 6, le composant ainsi réalisé est couplé à une plaque 90 portant, en vis-à-vis des électrodes E, des électrodes F. Un espace est prévu entre les électrodes E et F. Cet espace est rempli d'un cristal liquide LC. On réalise ainsi une cellule à cristal liquide dont la commande se fait par un élément non linéaire constitué par des diodes Schottky en opposition.

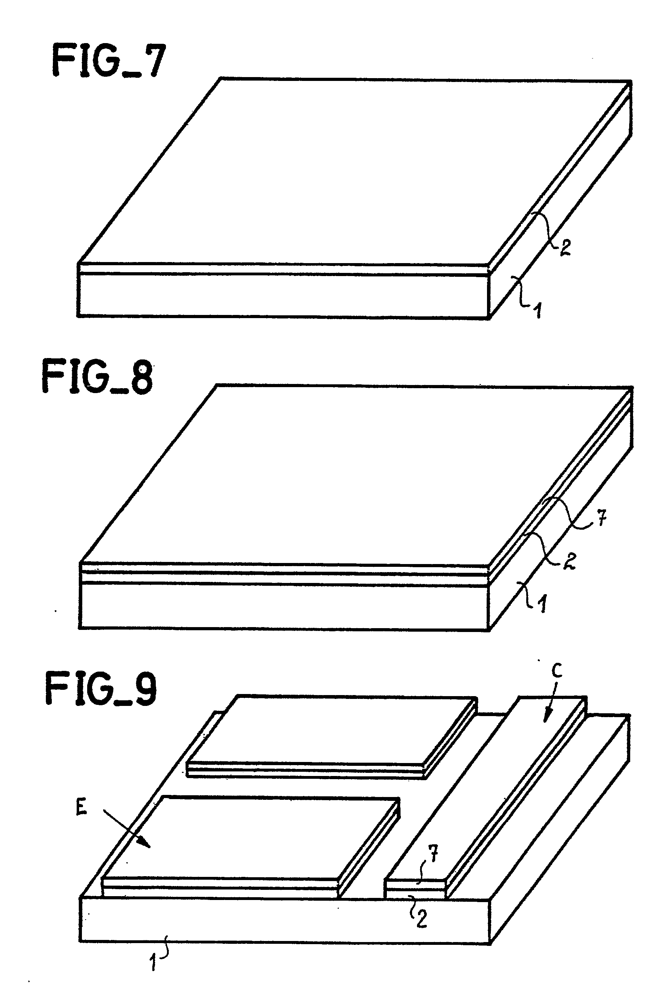

En se reportant aux figures 7 à 12, on va maintenant décrire une variante du procédé de l'invention. Ce procédé vise à réaliser des éléments de commande non linéaires constitués de diodes de type PIN, c'est-à-dire comportant des couches de semiconducteurs successives dopée $p^+$, non dopée et dopée $n^+$.

Selon une première phase, on dépose sur un substrat 1 une couche 2 d'un matériau conducteur. Ce matériau peut être transparent tel que de l'oxyde d'indium ($In_2O_3$) pour un fonctionnement en transmission optique. Il peut être également du métal (tel que du chrome, du Nickel-chrome, de l'aluminium) pour un fonctionnement en réflexion. L'épaisseur de la couche doit avoir entre 50 et 100 nm. On obtient ainsi la pièce représentée en figure 7.

Au cours d'une deuxième phase, on dépose une couche 7 de silicium dopée $p^+$. Ce dépôt peut se faire soit par épitaxie en phase vapeur (CVD) assisté plasma, soit par épitaxie en phase vapeur à pression réduite (LPCVD). L'épaisseur de cette couche doit avoir environ 20 à 50 nm d'épaisseur.

Au cours d'une troisième phase, on procède à une gravure, par attaque chimique en plasma par exemple, des deux couches 2 et 7 de façon à réaliser des électrodes E et des conducteurs de colonnes C. Cette réalisation nécessite donc un masquage des couches de matériaux 2 et 7 à conserver. On obtient ainsi une pièce telle que représentée en figure 9.

Au cours d'une quatrième phase, on dépose une couche 8 de silicium amorphe non dopé ou légèrement dopé de type n. Ce dépôt se fait par l'une des méthodes décrites précédemment. L'épaisseur de la couche doit avoir entre 300 et 500 nm.

Au cours d'une cinquième phase, on déposer de la même façon une couche 9 de silicium amorphe dopé de type $n^+$ et d'épaisseur 20 nm environ.

Au cours d'une sixième phase, on dépose une couche de métal 10 tel que du chrome, du Nickel-chrome ou de l'aluminium. Ce dépôt se fait par effet Joule et l'épaisseur de la couche doit être d'environ 50 nm pour servir d'écran à la lumière pour les couches déposées précédemment.

Enfin, au cours d'une septième phase, on procède à la formation de structures mésas par attaque chimique ou plasma. Les quatre couches 7, 8, 9 et 10 sont attaquées après avoir masqué les parties à conserver.

On obtient ainsi un dispositif tel que représenté en figure 11 dans lequel une électrode E est couplée à un conducteur de colonne C par deux diodes en opposition. Les deux diodes ont en commun une grille métallique 10 et possèdent successivement une couche 9 de silicium amorphe dopée n+, une couche 8 de silicium amorphe non dopée, une couche 7 de silicium amorphe dopée p+ et une couche 2 d'un matériau conducteur.

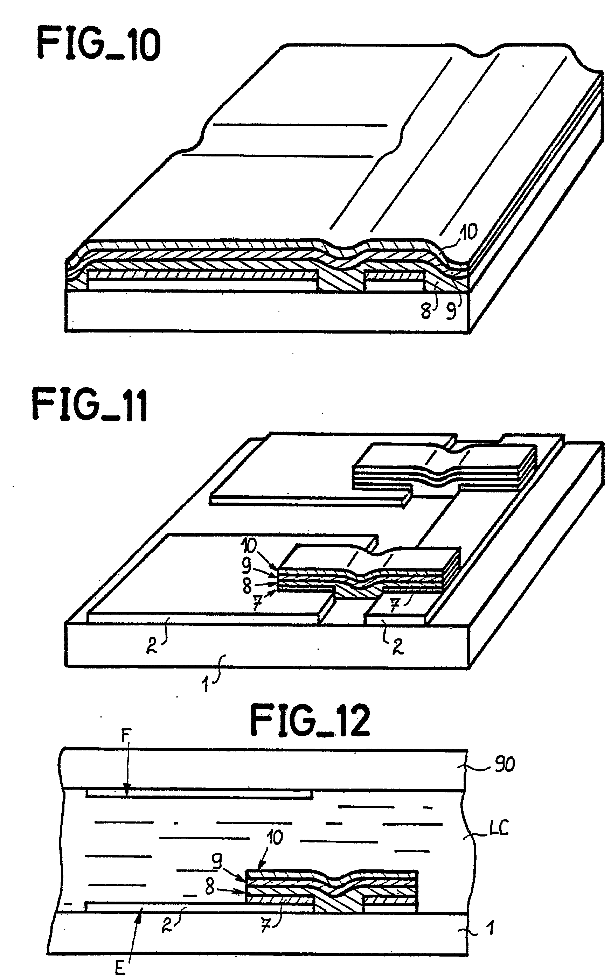

Un tel dispositif de commande à diodes peut être utilisé dans une cellule d'affichage à cristal liquide tel que représenté en figure 12 et constituée comme la cellule d'affichage à cristal liquide de la figure 6.

Il est à noter que dans le procédé ainsi décrit, au cours de la deuxième phase, le silicium déposé peut être dopé n+. Dans ce cas, au cours de la cinquième phase, le silicium au lieu d'être dopé n+, sera dopé p+. On obtiendra alors des diodes inversées par rapport à celles représentées en figure 11.

De la même façon que cela a été décrit en se référant à la figure 6, on obtient un dispositif d'affichage à cristal liquide représenté par la figure 12 en associant, à la plaque 1 (muni des électrodes E, des conducteurs C et des éléments de commande), une plaque 90 munie d'électrodes F et en remplissant l'espace existant entre les deux plaques 1 et 90 par un cristal liquide LC.

La technologie de l'écran proprement dit est bien connue de l'homme de l'art : couches d'ancrage, commandes d'épaisseur, contre-électrodes transparentes et introduction du cristal liquide, etc...

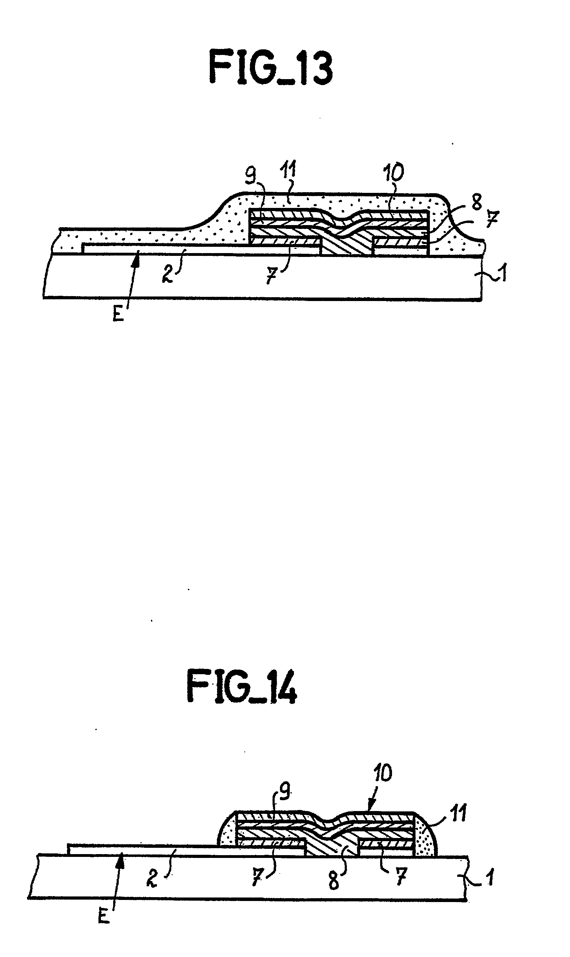

Par ailleurs, le procédé de l'invention peut être complété comme cela est représenté en figures 13 et 14 par une phase de passivation des flancs des structures mésas obtenues de façon à éliminer les courant de fuites néfastes pouvant apparaître sur les surfaces verticales des mésas. Cette passivation se fait sans étape de masquage supplémentaire par dépôt d'un diélectrique sur l'ensemble de la lame 1, puis attaque plasma anisotrope (RIE) qui conserve le diélectrique uniquement sur les flancs des mésas.

Cette passivation peut également se faire par dépôt d'un diélectrique suivi d'une photolithogravure qui nécessite un masquage dont la précision n'est pas critique.

Le procédé de réalisation selon l'invention est bien adapté à la réalisation de structures redondantes par exemple pour l'élément image défini en deux demi-points, chaque demi-point ayant accès à la diode de commande, ce qui minimise le rique de mauvais fonctionnement de diode.

On voit donc que le procédé de l'invention permet de réaliser des éléments de commande non linéaires de type diodes pour écran de visualisation à cristal liquide. Ce procédé présente les avantages décrits dans le préambule de la présente description et notamment celui de ne nécessiter que deux opérations de masquage qui ne nécessitent elles-mêmes aucune précision particulière.

**Revendications**

1. Procédé de réalisation de matrices de commande à diodes pour écran plat de visualisation électrooptique comportant un substrat (1) muni d'une face plane (10), caractérisé en ce qu'il comporte les phases successives suivantes :
   - phase (a) de dépôt sur la surface d'une face plane du substrat (1) d'une première couche d'un matériau conducteur (2) ;
   - phase (b) d'attaque de la couche de matériau conducteur (2) pour former les électrodes de commande (20) de l'écran de visualisation et les conducteurs de commande (21) ;
   - phase (c) de dépôt d'une couche semiconductrice amorphe non dopée (4) ;
   - phase (d) de dépôt d'une couche semiconductrice amorphe dopée (5) ;
   - phase (e) de dépôt d'une deuxième couche d'un matériau conducteur (6) ;
   - phase (f) d'attaque des différentes couches ainsi déposées jusqu'à la première couche de matériau conducteur (2) de façon à créer des plots reliant les conducteurs de commande (21) aux électrodes de commande (22).

2. Procédé selon la revendication 1, caractérisé en ce que : la première phase (a) comporte une étape de dépôt d'une couche d'un matériau conducteur (2) transparent suivie d'une étape de dépôt d'une couche métallique (3) ; la deuxième phase (b) permet d'attaquer les deux couches (2 et 3) des deux étapes précédentes ; la dernière phase (f) permet d'attaquer les différentes couches jusqu'à la couche de matériau conducteur transparent (2) non comprise.

3. Procédé selon la revendication 1, caractérisé en ce que la troisième phase (c) de dépôt d'une couche semiconductrice amorphe non dopée (3) se fait avec un gradient de température croissant afin d'obtenir un profil d'hydrogène décroissant dans ladite couche semiconductrice (3) en fonction de l'épaisseur déposée.

4. Procédé selon la revendication 1, caractérisé en ce que le matériau déposé lors de la première phase (a) est un matériau conducteur transparent.

5. Procédé selon la revendication 1, caractérisé en ce que le matériau déposé lors de la première phase (a) est un métal.

6. Procédé selon l'une des revendications 4 ou 5, caractérisé en ce qu'il comporte entre la première phase (a) et la deuxième phase (b), une phase supplémentaire (a') de dépôt d'une couche semiconductrice dopée p+, tandis que la quatrième phase (d) permet le dépôt d'une couche semiconductrice dopée n+.

7. Procédé selon l'une des revendications 4 ou 5, caractérisé en ce qu'il comporte entre la première phase (a) et la deuxième phase (b), une phase supplémentaire (a') de dépôt d'une couche semiconductrice dopée n+, tandis que la quatrième phase (d) permet le dépôt d'une couche semiconductrice dopée p+.

8. Procédé selon l'une quelconque des revendications précédentes, caractérisé en ce qu'il est complété par une dernière phase de passivation des flancs des plots.

9. Ecran plat comportant une première lame (90) et une deuxième lame (1) parallèles entre lesquelles est placé un matériau électrooptique (LC), les faces des deux lames (90,1) en contact avec le matériau électrooptique (LC) étant munies d'électrodes et de conducteurs de commande, la première lame (90) au moins étant transparente, caractérisé en ce que les électrodes (E) de la deuxième lame (1) sont couplés aux conducteurs de commande (C) de la même lame par des éléments de commande non linéaires réalisés selon l'une quelconque des revendications 1 à 6.

## Claims

1. A method for producing control matrices with diodes and suitable for use in a flat electro-optical video screen, comprising a substrate (1) provided with a plane face (10), characterized in that it includes the following successive steps:
   — a step (a) of depositing a first layer (2) of a conductor material on a plane face of the substrate (1),
   — a step (b) of etching the conductor material layer (2) in order to constitute the control electrodes (20) of the video screen and the control conductors (21),
   — a step (c) of depositing an undoped amorphous semiconductor layer (4),
   — a step (d) of depositing a doped amorphous semiconductor layer (5),
   — a step (e) of depositing a second layer of a conductor material (6), and
   — a step (f) of etching the different layers as deposited down to the first layer (2) of conductive material, in order to realize contacts suitable for connecting the control conductors (21) to the central electrodes (22).

2. A method according to claim 1, characterized in that the first step (a) comprises a step of depositing a layer (2) of transparent conductor material, followed by a step of depositing a metal layer (3), that the second step (b) allows to etch the two layers (2 and 3) of the two preceding steps, and that the last step (f) allows to etch the different layers down to the transparent layer (2) of conductor material, the latter being excluded therefrom.

3. A method according to claim 1, characterized in that the third step (c) of depositing an undoped amorphous semiconductor layer (3) is implemented in applying a rising temperature gradient, so as to obtain a hydrogen profile that decreases in said semiconductor layer (3) as a function of the layer thickness.

4. A method according to claim 1, characterized in that the material deposited during the first step (a) is a transparent conductor material.

5. A method according to claim 1, characterized in that the material deposited during the first step (a) is a metal.

6. A method according to claim 4 or 5, characterized in that it includes, inserted between the first step (a) and the second step (b), a supplemental step (a') of depositing a p⁺⁻-doped semiconductor layer, whereas the fourth step (d) allows to deposit a n⁺⁻-doped semiconducting layer.

7. A method according to claim 4 or 5, characterized in that it includes, inserted between the first step (a) and the second step (b), a supplemental step (a') of depositing a n⁺-doped type semiconducting layer, whereas the fourth step (d) allows to deposit a p⁺⁻-doped semiconducting layer.

8. A method according to any one of the preceding claims, characterized in that it is completed by a last step of passivating the flanks of the contacts.

9. A flat screen comprising a first pane (90) and a second pane (1) parallel to one another, in between which is placed an electro-optical material (LC), the faces of said two panes (90, 1) which are in contact with said electro-optical material being provided with electrodes and control conductors, and at least the first pane (90) being transparent, characterized in that the electrodes (E) of the second panel (1) are connected to the control conductors (C) of said pane by means of non-linear control elements as produced in accordance with any one of the preceding claims 1 through 6.

## Patentansprüche

1. Verfahren zur Herstellung von diodenbestückten Steuermatrizen für flache elektro-optische Bildschirme mit einem Substrat (1), das eine ebene Fläche besitzt, dadurch gekennzeichnet, daß das Verfahren die folgenden, aufeinanderfolgenden Phasen aufweist:
   — Phase (a): Aufbringen einer ersten Schicht leitenden Materials (2) auf die Oberfläche einer ebenen Fläche des Substrats (1),
   — Phase (b): Abarbeitung der leitenden Materialschicht (2) mit dem Ziel der Herausbildung der Steuerelektroden (20) des Bildschirms und der Steuerleiter (21),
   — Phase (c): Aufbringen einer nichtdotierten, amorphen Halbleiterschicht (4),
   — Phase (d): Aufbringen einer dotierten, amorphen Halbleiterschicht (5),
   — Phase (e): Aufbringen einer zweiten Schicht leitenden Materials (6) und
   - Phase (f): Abarbeitung der verschiedenen so aufgetragenen Schichten bis zur ersten Schicht leitenden Materials (2), derart, daß Kontakte zur Verbindung der Steuerleiter (21) mit den Steuerelektroden (22) gebildet werden.

2. Verfahren nach Anspruch 1, dadurch gekennzeichnet, daß die erste Phase (a) einen Verfahrensschritt des Auftragens einer Schicht aus transparentem, leitendem Material (2), gefolgt von einem Verfahrensschritt des Auftragens einer Metallschicht (3) aufweist, daß die zweite Phase (b) das Bearbeiten der beiden Schichten (2 und 3) der vorhergehenden beiden Stufen ermöglicht, und daß die letzte Phase (f) die Abarbeitung der verschiedenen Schichten bis zur Schicht (2) aus transparentem leitenden Material ermöglicht, diese jedoch nicht eingeschlossen.

3. Verfahren nach Anspruch 1, dadurch gekennzeichnet, daß die dritte Phase (c) des Aufbringens einer nichtdotierten, amorphen Halbleiterschicht (3) mit zunehmendem Temperaturgradienten verläuft, um in Abhängigkeit von der Schichtdicke eine abnehmende Wasserstoffverteilung in der Halbleiterschicht (3) zu erzielen.

4. Verfahren nach Anspruch 1, dadurch gekennzeichnet, daß das in der ersten Phase (a) aufgetragene Material ein transparentes, leitendes Material ist.

5. Verfahren nach Anspruch 1, dadurch gekennzeichnet, daß das in der ersten Phase (a) aufgetragene Material ein Metall ist.

6. Verfahren nach Anspruch 4 oder 5, dadurch gekennzeichnet, daß es zwischen der ersten Phase (a) und der zweiten Phase (b) eine zusätzliche Phase (a') des Aufbringens einer $p^+$-dotierten Halbleiterschicht aufweist, während die vierte Phase (d) das Aufbringen einer $n^+$-dotierten Halbleiterschicht ermöglicht.

7. Verfahren nach Anspruch 4 oder 5, dadurch gekennzeichnet, daß es zwischen der ersten Phase (a) und der zweiten Phase (b) eine zusätzliche Phase (a') des Aufbringens einer $n^+$-dotierten Halbleiterschicht aufweist, während die vierte Phase (d) die Aufbringen einer $p^+$-dotierten Halbleiterschicht ermöglicht.

8. Verfahren nach einem beliebigen der vorhergehenden Ansprüche, dadurch gekennzeichnet, daß es durch einen letzte Phase zum Passivieren der Flanken der Kontakte vervollständigt wird.

9. Flacher Bildschirm mit einer ersten Scheibe (90) und einer zweiten Scheibe (1), die zueinander parallel verlaufen und zwischen die ein elektro-optisches Material (LC) eingebracht ist, wobei die mit dem elektro-optischen Material (LD) in Berührung stehenden Flächen der beiden Scheiben (90, 1) mit Elektroden und Steuerleitungen ausgerüstet sind und mindestens die erste Scheibe (90) transparent ist, dadurch gekennzeichnet, daß die Elektroden (E) der zweiten Scheibe (1) mit den Steuerleitern (C) derselben Scheibe über nichtlineare Steuerelemente verbunden sind, welche nach einem der Ansprüche 1 bis 6 hergestellt sind.

# FIG_1

# FIG_2

# FIG_3

# FIG_4

# FIG_5

# FIG_6

FIG_7

FIG_8

FIG_9

FIG_10

FIG_11

FIG_12

# FIG_13

# FIG_14